# EUROPÄISCHE PATENTSCHRIFT

(11) **EP 3 245 775 B1**
(45) Veröffentlichungstag und Bekanntmachung des Hinweises auf die Patenterteilung: **19.12.2018**
(21) Anmeldenummer: 16711582.3
(22) Anmeldetag: 18.03.2016
(51) Int. Cl.: H04L 29/06

(54) **EINWEG-KOPPELVORRICHTUNG MIT UNTERFRAGE-EINRICHTUNG ZUM RÜCKWIRKUNGSFREIEN ÜBERTRAGEN VON DATEN**
ONE-WAY CONNECTING DEVICE WITH INTERCEPTION DEVICE FOR INTERACTIONNEUTRAL TRANSMISSION OF DATA
APPAREIL DE CONNEXION A SENS-UNIQUE AVEC APPAREIL D'INTERCEPTION POUR TRANSMISSION DE DONNEES SANS INTERACTION

(30) Priorität: 31.03.2015 DE 102015205833
(43) Veröffentlichungstag der Anmeldung: 22.11.2017
(73) Patentinhaber: Siemens Mobility GmbH, 81739 München (DE)
(72) Erfinder: BLÖCHER, Uwe, 82178 Puchheim (DE); FALK, Rainer, 85586 Poing (DE); REINERT, Jens, 38302 Wolfenbüttel (DE); TANG, Wen, Beijing 100102 (CN); WIMMER, Martin, 85579 Neubiberg (DE)
(86) Internationale Anmeldenummer: PCT/EP2016/055915
(87) Internationale Veröffentlichungsnummer: WO 2016/156063

(56) Entgegenhaltungen:
- WO-A1-2014/029958
- WO-A1-2015/020985
- US-A1- 2003 202 663
- US-A1- 2015 016 256

## Beschreibung

Die Erfindung betrifft eine Einweg-Koppelvorrichtung, eine Anfrageeinrichtung, ein Verfahren sowie ein Computerprogrammprodukt zum rückwirkungsfreien Übertragen von Daten von mindestens einer Vorrichtung, die in einem ersten Netzwerk mit hoher Sicherheitsanforderung angeordnet ist, in ein zweites Netzwerk mit geringerer Sicherheitsanforderung.

Sicherheitslösungen für den Transfer von Daten zwischen Netzwerken mit unterschiedlichen Sicherheitsanforderungen, sogenannte Cross-Domain-Security-Lösungen, werden bislang nur für spezielle Bereiche, wie Behördenkommunikation verwendet, in denen hohe Sicherheitsanforderungen gelten und in denen eine Sicherheitsklassifikation von Dokumenten bzw. Informationen vorliegt. Durch eine Cross-Domain-Lösung wird ein automatisierter sicherer Austausch von Dokumenten und Nachrichten, wie beispielsweise auch E-Mails, zwischen unterschiedlich hohen Sicherheitszonen realisiert. Dabei ist eine entscheidende Anforderung, dass Daten lediglich von der Zone mit höheren Sicherheitsanforderungen Daten in eine Zone mit niedrigerer Sicherheitsanforderung übertragen werden und dabei weder neue Daten bei der Übertragung in das Netz mit höherer Sicherheitsanforderung neu eingebracht werden, noch Daten innerhalb des Netzwerks mit hoher Sicherheitsanforderung durch den Austausch verändert werden. Eine wesentliche Komponente ist dabei eine Datendiode, die die Unidirektionalität der Datenkommunikation sicherstellt.

Aus der US 2012/291089 ist beispielsweise eine Lösung zum sicheren Datenaustausch zwischen zwei Sicherheitsbereichen bekannt. Dabei ist eine Datenmanagement-Einheit sowohl mit der ersten als auch der zweiten Sicherheitszone verbunden, die die Sicherheitsregeln beider Domänen berücksichtigt.

Es sind auch Datendioden bekannt, die physikalisch eine Einwegkommunikation realisieren. Zur Unterstützung einer Datenübertragung mit bidirektionalen Datenübertragungsprotokollen, wie beispielsweise TCP, ist es bekannt, entweder einen extrem eingeschränkten Rückkanal für die Übertragung von Bestätigungsnachrichten zuzulassen. Alternativ dazu wird in der US 7,675,867 das Protokoll an einem Proxy terminiert und beispielsweise mittels Vorwärtsfehlerkorrektur über die unidirektionale Übertragungsstrecke übertragen.

Schliesslich ist auf die Druckschrift US2015/016256-A1 hinzuweisen, in welcher eine Koppeltechnik vorgestellt wird, die erhöhten Sicherheitsanforderungen genügt.

Ferner sei die Druckschrift US2003/202663-A1 genannt, welche ebenfalls ein mit erhöhter Sicherheit arbeitendes elektronische Nachrichtenversendesystem beschreibt.

Um einen rückwirkungsfreien Datenaustausch von einem sicherheitskritischen Steuerungsnetzwerk, beispielsweise einem Bahnsicherungsnetzwerk, in ein weniger kritisches Netzwerk, wie beispielsweise ein Diagnosenetz oder ein Büronetzwerk, zu gewährleisten, sind oftmals auch internationale Standards, wie beispielsweise der ISO/IEC 62443 zu berücksichtigen, der strenge sicherheitstechnische Anforderung bezüglich des Datenaustausches zwischen Sicherheitszonen festlegt.

Es ist somit die Aufgabe der vorliegenden Erfindung, Verfahren und Vorrichtungen zu einer entsprechenden Datenübertragung bereitzustellen, die einerseits die Rückwirkungsfreiheit der Datenübertragung garantieren und andererseits einfach realisierbar sind. Des Weiteren soll eine solche Vorrichtung bzw. ein solches Verfahren flexibel in verschiedenen Anwendungsgebieten einsetzbar sein.

Die Aufgabe wird durch die in den unabhängigen Ansprüchen beschriebenen Maßnahmen gelöst. In den Unteransprüchen sind vorteilhafte Weiterbildungen der Erfindung dargestellt.

Die erfindungsgemäße Einweg-Koppelvorrichtung zum rückwirkungsfreien Übertragen von Daten von mindestens einer Vorrichtung, die in einem Netzwerk mit hoher Sicherheitsanforderung angeordnet ist, in ein zweites Netzwerk mit geringerer Sicherheitsanforderung enthält eine Anfrageeinrichtung, eine Mithöreinrichtung und eine Empfangseinrichtung. Die Anfrageeinrichtung ist derart ausgebildet, eine erste Kommunikationsverbindung innerhalb des ersten Netzwerks zu der mindestens einen Vorrichtung bereitzustellen und darüber erste Daten von der mindestens einen Vorrichtung abzufragen und anschließend die ersten Daten über eine zweite Kommunikationsverbindung auf einer separaten Leitungsschleife zwischen zwei Schnittstellen der Anfrageeinrichtung zu übertragen. Die Mithöreinrichtung ist derart ausgebildet, Daten an der externen zweiten Kommunikationsverbindung mitzuhören und an die Empfangseinrichtung, die im zweiten Netzwerk angeordnet ist, zu übermitteln.

Unter einer Mithöreinrichtung ist dabei eine Einrichtung zu verstehen, die einen Datenstrom, der über die mitgehörte Verbindungsleitung übertragen wird, kopiert und die Kopie des Datenstroms ausgibt. Dabei findet insbesondere keine Auswertung, inhaltliche Verarbeitung oder Konvertierung der Daten des Datenstroms statt. Die Daten werden über die Empfangseinrichtung, die mit einem zweiten Netzwerk verbunden ist, ausgegeben.

Dies hat den Vorteil, dass die Rückwirkungsfreiheit sichergestellt ist. Andererseits kann über die Kommunikationsverbindung zwischen der Anfrageeinrichtung und einer oder mehreren Vorrichtungen im ersten Netzwerk gewünschte Daten abgefragt und über die Mithöreinrichtung und die Empfangseinrichtung dem zweiten Netzwerk zur Verfügung gestellt werden. Dabei erstreckt sich die erste Kommunikationsverbindung ausschließlich innerhalb des ersten Netzwerkes und wird in der mindestens einen Vorrichtung und der Anfrageeinrichtung terminiert.

In einer vorteilhaften Ausbildung der Erfindung weist die Anfrageeinrichtung eine erste Protokolleinheit zur Terminierung mindestens eines Kommunikationsprotokolls der ersten Kommunikationsverbindung zu der mindestens einen Vorrichtung auf. Insbesondere weist sie eine Terminierung des in Sicherungsnetzen häufig verwendeten OPC UA Protokolls auf.

Dies hat den Vorteil, dass in der Anfrageeinheit die ersten Daten direkt lesbar, d.h. ohne weitere Protokollinformation oder auch Verschlüsselung, vorliegen. Dies erleichtert es, solche Daten in der Empfangseinrichtung bzw. in weiteren Auswerteeinheiten des zweiten Netzwerkes auszuwerten und weiterzuverarbeiten. Es können unterschiedliche, auch komplexe Protokolle für die Kommunikationsverbindung in unveränderter Art für die Abfrage verwendet werden. Für Sicherungssysteme wird insbesondere das Uniform Architecture Protokoll der OPC Organisation, kurz OPC UA Protokoll genannt, verwendet. Dabei kann die Kommunikationsverbindung bzw. die entsprechende Datenübertragung auch kryptographisch gesichert sein. Da die Verbindung in der Anfrageeinrichtung terminiert wird, sind auch bspw. bei einem Verbindungsaufbau zwischen den Kommunikationspartnern ausgehandelte kryptographischen Verfahren und Schlüssel in der Protokolleinheit bekannt. Verschlüsselt übertragene erste Daten werden somit in der ersten Protokolleinheit der Anfrageeinrichtung decodiert und sind somit über die zweite Kommunikationsverbindung unverschlüsselt an das zweite Netzwerk übertragbar.

In einem weiteren Ausführungsbeispiel weist die Anfrageeinrichtung eine zweite Protokolleinheit zur Bereitstellung eines zweiten Kommunikationsprotokolls für die Übertragung der ersten Daten über die Verbindungsschleife auf.

Dies hat den Vorteil, dass die ersten Daten bereits durch die Anfrageeinrichtung gemäß einem zweiten Protokoll, das beispielsweise in der Empfangseinrichtung vorliegt, strukturiert und übertragen werden. Die Empfangseinrichtung benötigt somit keine Protokollkonvertierung und kann weniger komplex ausgebildet sein. Es kann somit insbesondere eine einfach auswertbare Datenübertragung erfolgen. Es können somit flexibel unterschiedliche Protokolle für die erste Kommunikationsverbindung und eine einheitliche Übertragung über die zweite Kommunikationsverbindung verwendet werden. Andererseits kann die zweite Kommunikationsverbindung dem Protokoll entsprechen, das in der Empfangseinrichtung unterstützt wird.

In einer vorteilhaften Ausführungsform weist die Anfrageeinrichtung eine Konvertierungseinheit zur Formatkonvertierung der ersten Daten auf.

In einer weiteren vorteilhaften Ausführungsform weist die Anfrageeinrichtung eine Speichereinheit zum Speichern der ersten Daten.

Dies ermöglicht es, die ersten Daten in ein für die Empfangseinheit im zweiten Netzwerk günstiges Datenformat über die zweite Kommunikationsverbindung zu senden und beispielsweise entsprechend einem verwendeten Datenformat in eine Datenbank abzuspeichern. Damit reicht es aus, wenn die Empfangseinrichtung lediglich ein bestimmtes Datenformat für den Empfang und die Weiterverarbeitung der ersten Daten unterstützt.

In einer vorteilhaften Ausführungsform ist die Mithöreinrichtung als Datenkopierer, insbesondere als ein Netzwerk-Tap ausgebildet.

Dies hat den Vorteil, dass die Unidirektionalität der Datenübertragung sichergestellt wird, da lediglich Daten von der zweiten Kommunikationsverbindung kopiert werden können, nicht aber Daten in die zweite Kommunikationsverbindung oder indirekt in die erste Kommunikationsverbindung vom zweiten Netzwerk aus eingebracht werden können. Dies sichert gleichzeitig die Rückwirkungsfreiheit, da keine Änderung der auf der zweiten Kommunikationsverbindung übertragenen ersten Daten und keine Änderung von auf der ersten Kommunikationsverbindung übertragenen Daten stattfindet. Auch können keine zusätzlichen neuen Daten in die erste Kommunikationsverbindung oder zweite Kommunikationsverbindung eingebracht werden. Gleichzeitig ist dies ein einfach realisierbares Verfahren.

Durch die Einweg-Koppelvorrichtung ist somit eine dreistufige Absicherung der rückwirkungsfreien Datenübertragung realisiert. Die erste Stufe bildet die abgeschlossene Kommunikationsverbindung im sicherheitskritischen ersten Netzwerk. Die zweite Stufe bildet die zweite Kommunikationsverbindung. Diese ist physikalisch von der ersten Kommunikationsverbindung und anderen Netzwerkübertragungsstrecken im ersten Netzwerk separiert. Somit ist ein Einstreuen von Nachrichten aus der zweiten Kommunikationsverbindung in die erste Kommunikationsverbindung ausgeschlossen oder zumindest minimiert. Auch wird eine Beeinflussung von Übertragungsqualitätsparametern einer Datenübertragung im ersten Netzwerk, wie beispielsweise Verzögerungszeiten für einen Kanalzugriff, vermieden. Im Allgemeinen ist die Anfrageeinheit in einem räumlich geschützten und/oder abgeschlossenen Bereich, beispielsweise einem Schaltschrank, angeordnet. Somit ist eine Manipulation der zweiten Kommunikationsverbindung erschwert. Die dritte Stufe bildet die als Netzwerk-Tap bzw. Datenkopierer ausgebildete Mithöreinrichtung, die eine unveränderte Kopie der ersten Daten erstellt und eine vom ersten Netzwerk entkoppelte Übertragung in das zweite Netzwerk ermöglicht. Ein Einschleusen von Nachrichten in die Verbindungsschleife durch die Mithöreinheit ist nicht möglich und nicht vorgesehen.

Wird die erfindungsgemäße Einweg-Koppelvorrichtung nicht in einem abgeschlossenen Gebiet, beispielsweise innerhalb eines Schaltschranks oder innerhalb eines Netzwerk-Racks realisiert, kann eine Übertragung der ersten Daten über die zweite Kommunikationsverbindung kryptographisch gesichert erfolgen, so dass ein Mithören der ersten Daten erschwert bzw. nicht möglich ist.

Eine erfindungsgemäße Anfrageeinheit zum rückwirkungsfreien Übertragen von ersten Daten von mindestens einer Vorrichtung in einem ersten Netzwerk ist derart ausgebildet, eine erste Kommunikationsverbindung innerhalb des ersten Netzwerks zu mindestens einer Vorrichtung bereitzustellen und darüber erste Daten von der mindestens einen Vorrichtung abzufragen und anschließend die ersten Daten über eine zweite Kommunikationsverbindung auf einer separaten Leitungsschleife von einer Ausgangsschnittstelle der Anfrageeinrichtung direkt an eine Eingangsschnittstelle der Anfrageeinrichtung übertragen.

Dies hat den Vorteil, dass die Anfrageeinrichtung vollständig in das erste Netzwerk integriert ist und zur Abfrage oder auch Sammlung von Informationen von den Vorrichtungen innerhalb des ersten Netzwerks dient. Es können somit erste Daten, wie beispielsweise eine Status-Information von Sicherungsanlagen innerhalb des stark gesicherten Bahnsteuerungsnetzwerkes ermittelt werden. Zum anderen ist über die separate zweite Kommunikationsverbindung eine einfache und rückwirkungsfreie Übertragung in ein zweites Netzwerk mit geringeren Sicherheitsanforderungen möglich. Dabei sind die erste und die zweite Kommunikationsverbindung voneinander getrennt und bilden somit bereits innerhalb des ersten Netzwerkes eine vollständige Entkopplung vom ersten Netzwerk. Diese Entkopplung ist ebenfalls Grundlage für einen flexiblen Einsatz der Anfrageeinrichtung in gesicherten Netzen mit unterschiedlichen ersten Kommunikationsprotokollen.

Das erfindungsgemäße Verfahren zum rückwirkungsfreien Übertragen von Daten von mindestens einer Vorrichtung, die in einem ersten Netzwerk mit hoher Sicherheitsanforderung angeordnet ist, in ein zweites Netzwerk mit geringer Sicherheitsanforderung weist nachfolgende Verfahrensschritte auf.

Ein Bereitstellen einer ersten Kommunikationsverbindung innerhalb des ersten Netzwerks, ein Abfragen und Empfangen von ersten Daten von mindestens einer Vorrichtung über die Kommunikationsverbindung, ein Übertragen der ersten Daten über eine separate zweite Kommunikationsverbindung, ein Mithören der ersten Daten an der zweite Kommunikationsverbindung und ein Übermitteln der ersten Daten an ein zweites Netzwerk mit geringer Sicherheitsanforderung.

Durch das erfindungsgemäße Verfahren werden erste Daten aus einem sicherheitsrelevanten Netzwerk rückwirkungsfrei in ein zweites Netzwerk mit geringerer Sicherheitsanforderung übertragen. Dies ist durch die Separierung der Datenübertragung über die erste Kommunikationsverbindung und einer separaten zweiten Kommunikationsverbindung innerhalb des ersten Netzwerks besonders flexibel und einfach realisiert. Des Weiteren wird durch das Mithören eine zuverlässige Übertragung in lediglich eine Richtung und zwar vom ersten Netzwerk zum zweiten Netzwerk sichergestellt.

In einem vorteilhaften Ausführungsbeispiel wird ein erstes Kommunikationsprotokoll für die Kommunikationsverbindung zu der mindestens einen Vorrichtung, insbesondere das OPC UA Protokoll, verwendet und/oder es wird ein zweites Kommunikationsprotokoll für die Übertragung der ersten Daten über die zweite Kommunikationsverbindung verwendet.

Unterschiedliche Protokolle auf den beiden Kommunikationsverbindungen ermöglichen einen flexiblen Einsatz des Verfahrens in unterschiedlichen Anwendungsbereichen bzw. Sicherungs- und Automatisierungsnetzen. Des Weiteren kann beispielsweise immer ein gleiches zweites Kommunikationsprotokoll zur Vereinfachung der Auswertung in einem zweiten Netzwerk verwendet werden. Die ersten Daten werden somit von einem ersten Kommunikationsprotokoll auf ein zweites Kommunikationsprotokoll konvertiert.

In einer vorteilhaften Ausführungsform wird das Format der ersten Daten in einer Anfrageeinrichtung konvertiert und/oder die ersten Daten in einer Speichereinheit gespeichert.

Dies ermöglicht eine flexible Handhabung der ersten Daten insbesondere können die ersten Daten bereits im ersten Netzwerk in ein für die Auswertung im zweiten Netzwerk günstigen Datenformat umgewandelt werden. Das Speichern der Daten ermöglicht ein Sammeln der Daten und lediglich ein temporäres Übertragen der ersten Daten in das zweite Netzwerk. Eine zweite Datenverbindung und Mittel zum Mithören müssen damit nicht kontinuierlich vorhanden sein.

In einer vorteilhaften Ausführungsform werden die ersten Daten auf der Kommunikationsverbindung verschlüsselt übertragen und vor der Übertragung auf der zweiten Kommunikationsverbindung entschlüsselt.

Dies hat den Vorteil, dass erste Daten, die im ersten Kommunikationsnetz verschlüsselt übertragen werden, auch zu einer Auswertung im zweiten Netzwerk herangezogen werden können.

In einer vorteilhaften Ausführungsform werden die Daten auf der zweite Kommunikationsverbindung unverschlüsselt übertragen.

Damit müssen die Anfrageeinrichtung für die zweite Kommunikationsvorrichtung und insbesondere die Empfangseinrichtung keine Verschlüsselungsmittel bereitstellen. Somit sind weniger komplexe Anfrage- bzw. Empfangseinrichtungen einsetzbar.

In einer alternativen Ausführungsvariante werden die Daten zur Übertragung auf der zweiten Kommunikationsverbindung mit einem vorbestimmten kryptographischen Verfahren verschlüsselt.

Dies schützt die Datenübertragung zusätzlich vor einem unbefugten Mithören oder einer Manipulation der Datenübertragung, insbesondere wenn eine solche Einweg-Koppelvorrichtung nicht in einem geschützten Bereich, wie beispielsweise innerhalb eines Schaltschranks oder innerhalb eines Netzwerk-Racks, sondern von außen zugänglich angeordnet ist.

Insbesondere kann dabei ein bestimmtes Verschlüsselungsverfahren zwischen Anfrageeinrichtung und Empfangseinrichtung vereinbart werden und dieses bestimmte Verschlüsselungsverfahren immer für die Übertragung über die zweite Kommunikationsverbindung verwendet werden.

In einer vorteilhaften Ausführungsform werden die Daten in eine Auswertedatenbank im zweiten Netzwerk gespeichert und auf Anfrage oder selbsttätig an eine Auswerteeinrichtung weitergeleitet.

Dies hat den Vorteil, dass nur temporär eine aktive Verbindung zwischen der Empfangseinheit und einer Auswerteeinrichtung bereitgestellt werden muss. Auch können die aus dem ersten Netzwerk empfangenen Daten in gewünschten Überwachungsabständen ausgewertet werden.

Ein erfindungsgemäßes Computerprogrammprodukt wird beansprucht, das direkt in einem Speicher eines digitalen Computers ladbar ist und Programmcodeteile umfasst, die dazu geeignet sind, die Schritte des Verfahrens durchzuführen.

Ausführungsbeispiele der erfindungsgemäßen Einweg-Koppelvorrichtung, der erfindungsgemäßen Anfrageeinrichtung sowie dem erfindungsgemäßen Verfahren sind in den Zeichnungen beispielhaft dargestellt und werden anhand der nachfolgenden Beschreibung näher erläutert. Es zeigen:
- Figur 1: ein Ausführungsbeispiel einer erfindungsgemäßen Einweg-Koppelvorrichtung angeordnet an der Kopplungsstelle zwischen einem ersten und einem zweiten Netzwerk in schematischer Darstellung;
- Figur 2: ein Ausführungsbeispiel einer erfindungsgemäßen Anfrageeinrichtung in schematischer Darstellung;
- Figur 3: ein Ausführungsbeispiel des erfindungsgemäßen Verfahrens in Form eines Ablaufdiagramms; und
- Figur 4: ein Ausführungsbeispiel des erfindungsgemäßes Verfahrens durch eine erfindungsgemäße EinwegKoppelvorrichtung in Form eines Nachrichtenflussdiagramms.

Einander entsprechende Teile sind in allen Figuren mit den gleichen Bezugszeichen versehen.

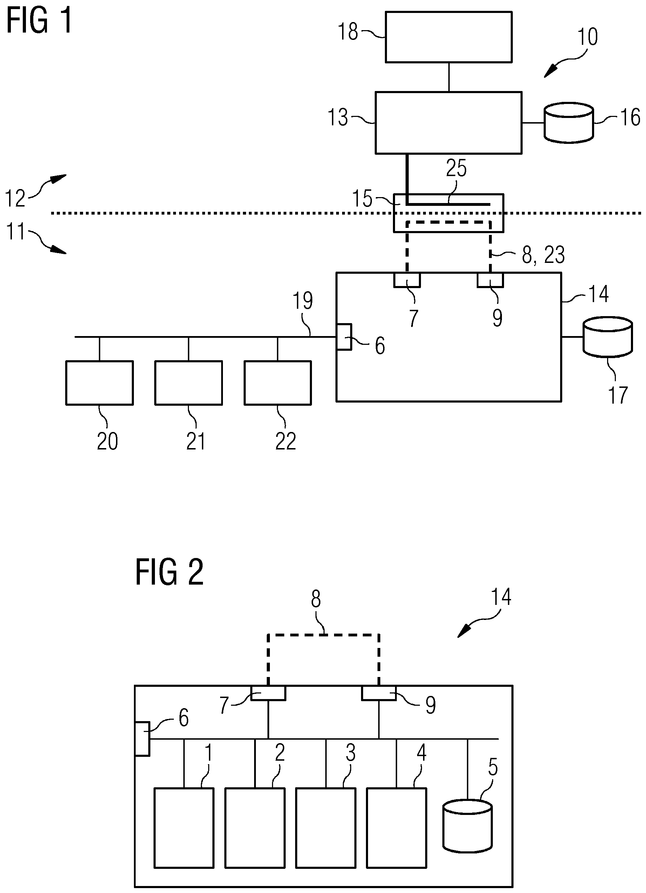

Figur 1 zeigt einen Anwendungsfall für eine Einweg-Koppelvorrichtung beispielsweise aus dem Bereich der Bahnautomatisierung. Ähnliche Anwendungsszenarien gibt es auch in der Fahrzeugsteuerungstechnik, in der Energieautomatisierung, in der Fertigungsautomatisierung oder in der Prozessautomatisierung. In einem ersten Netzwerk mit hohen Sicherheitsanforderungen sind Vorrichtungen 20, 21, 22 , wie beispielsweise Steuerrechner mit Feldgeräten über eine erste Kommunikationsverbindung 19 mit einer Abfrageeinrichtung 14 verbunden und senden Informationen an eine Abfrageeinrichtung 14. In dem Anwendungsfall sollen nun beispielsweise Statusinformationen der Vorrichtungen 20, 21, 22 an ein Diagnose-/Monitoring-System, in Figur 1 durch die Auswerteeinrichtung 18 dargestellt, übermittelt werden. Die Auswerteeinrichtung 18 ist dabei in ein zweites Netzwerk 12 mit niedrigen Sicherheitsanforderungen, wie beispielsweise einem Büronetz oder einem öffentlichen Netzwerk eingebunden. Aus sicherheitstechnischen Gesichtspunkten muss sichergestellt werden, dass eine gerichtete Einweg-Kommunikation realisiert wird, die verhindert, dass potentiell schädliche Daten, wie beispielsweise Viren, aus dem zweiten Netzwerk mit niedrigen Sicherheitsanforderungen 12 in das sicherheitskritische erste Netz 11 gelangen. Die Kommunikation innerhalb des ersten Netzwerks kann beispielsweise über ein OPC UA Protokoll, das häufig in Bahnautomatisierungsnetzen genutzt wird, erfolgen.

Unter einer rückwirkungsfreien Übertragung von Daten versteht man eine unidirektionale Einweg-Kommunikation, die verhindert, dass potentiell schädliche Daten aus dem zweiten Netzwerk in das sicherheitskritische erste Netzwerk 11 gelangen. Eine optimale rückwirkungsfreie Übertragung ist dann gegeben, wenn keinerlei Daten aus dem zweiten Netzwerk 12 in das erste Netzwerk 11 und auch keine Daten durch eine Koppelvorrichtung in das erste Netzwerk 11 eingebracht werden.

Die dargestellte Einweg-Koppelvorrichtung 10 realisiert eine solche rückwirkungsfreie Übertragung von Daten und umfasst eine Anfrageeinrichtung 14, eine Mithöreinrichtung 15 und eine Empfangseinrichtung 13. Dazu ist eine Anfrageeinrichtung 14 im ersten Netzwerk 11 angeordnet, die eine erste Kommunikationsverbindungen 19 zu Vorrichtungen 20, 21, 22 bereitstellt. Das Bereitstellen der ersten Kommunikationsverbindungen 19 umfasst den Verbindungsaufbau über alle Protokollschichten entsprechend einem OSI-Protokollstack des im ersten Netzwerk 11 verwendeten Kommunikationsprotokolls. Dies schließt beispielsweise eine gegenseitige Authentisierung der Vorrichtungen 20, 21, 22 und der Anfrageeinrichtung 14 und eine kryptographisch geschützte Übertragung der übertragenen ersten Daten mit ein. Dabei können beispielsweise zur sicheren Übertragung die Daten verschlüsselt über die Kommunikationsverbindung übertragen werden.

Die Anfrageeinrichtung weist dazu eine Netzwerkschnittstelle 6 auf, an der die Kommunikationsverbindung terminiert wird. Die Anfrageeinheit 14 ist derart ausgebildet, erste Daten bei den Vorrichtungen 20, 21, 22 abzufragen. Für diese Kommunikation wird beispielsweise das OPC UA Protokoll verwendet. Da die Kommunikationsverbindung gemäß dem Kommunikationsprotokoll vollständig in der Anfrageeinrichtung 14 terminiert wird, liegen dort die ersten Daten nun entschlüsselt und somit interpretierbar vor.

Wie in Figur 2 dargestellt, umfasst die Anfrageeinrichtung 14 neben der Netzwerkschnittstelle 6 eine Anfrageeinheit 1, die Information über die zu ermittelnden Daten von den gewünschten Vorrichtungen, wie beispielsweise Zeitpunkt der Abfrage und Art der gewünschten Daten, umfasst. In einer ersten Protokolleinheit 2 werden alle Mittel zum Aufbau der ersten Kommunikationsverbindung 19 innerhalb des ersten Netzwerks 11 bereitgestellt. Eine zweite Protokolleinheit 3 umfasst alle Mittel zum Aufbau einer von der ersten Kommunikationsverbindung 19 unterschiedlichen zweiten Kommunikationsverbindung 23 über eine separate Leitungsschleife 8. Eine Konvertierungseinheit 4 stellt Mittel bereit, um das Datenformat der über die erste Kommunikationsverbindung 19 eingegangenen ersten Daten in ein vorgegebenes anderes Format zu überführen, in dem die ersten Daten dann in einer Speichereinheit 5 abgelegt und/oder über die zweite Kommunikationsverbindung 23 übertragen werden. Die separate Schleifenverbindung 8 ist zwischen einer Ausgangsschnittstelle 7 und einer Eingangsschnittstelle 8 der Anfrageeinheit 14 ausgebildet. Die Schleifenverbindung 8 kann extern ausgebildet sein, also außerhalb der Anfrageeinrichtung 14 verlaufen. Die Schleifenverbindung 8 kann aber auch innerhalb der Anfrageeinrichtung 14 ausgebildet sein, insbesondere wenn sie als kombinierte Einrichtung integriert mit einer Mithöreinheit 15 ausgebildet ist. Die Schleifenverbindung 8 beginnt und endet somit direkt an der Anfrageeinrichtung 14, ohne dass weitere Einheiten oder Komponenten von der Schleifenverbindung 8 durchlaufen werden. Die Schleifenverbindung ist dabei über eine Ausgangsschnittstelle 7 und einer Eingangsschnittstelle 8 der Anfrageeinheit 14 gebildet, die nicht mit der Netzwerkschnittstelle 6 zusammenfallen. Die ersten Daten können optional in einer Abfragedatenbank 17 gespeichert werden, die als integraler Bestandteil oder als angeschlossene externe Datenbank ausgebildet sein.

Die Einweg-Koppelvorrichtung 10 umfasst, wie in Figur 1 dargestellt, desweiteren eine Mithöreinrichtung 15 mit einer Koppeleinheit 10, die beispielsweise als ein Netzwerk-Tap bzw. ein Datenkopierer ausgebildet ist. Dabei wird beispielsweise der Datenstrom dupliziert und über eine separate Verbindung zu einer Empfangseinheit 13 weitergeleitet, während der ursprüngliche Datenstrom unverändert in der Schleifenverbindung 8 zur Abfrageeinrichtung 14 fließt. Diese Mithöreinrichtung stellt die direkte Verbindungsstelle zwischen erstem Netzwerk 11 und zweiten Netzwerk 12 dar. Da durch die Koppeleinheit 10 lediglich ein Kopieren von Daten aus der zweiten Kommunikationsverbindung, nicht aber ein Einbringen von Daten in die zweite Kommunikationsverbindung 23 möglich ist, ist die Einweg-Kommunikation ausgehend vom ersten, sicherheitsrelevanten Netzwerk 11 zum weniger sicherheitsrelevanten zweiten Netzwerk 12 gegeben.

Solche Datenkopierer oder Netzwerk-Taps sind aus Netzwerk-überwachungssystemen oder auch aus Eindringungserkennungssystemen bekannt und stellen somit eine einfache und zuverlässige unidirektionale Datenübertragung dar. An der Empfangseinheit 13 kann optional eine Auswertedatenbank 17 angebunden sein, in der die mitgehörten bzw. kopierten ersten Daten gespeichert werden. Die Auswertedatenbank 17 kann ebenso als integrierter Bestandteil der Empfangseinrichtung ausgebildet sein.

Die in der Empfangseinrichtung 13 empfangenen ersten Daten können entweder durch einen Push-Mechanismus, also durch eine aktive Weiterleitung im Sinne eines Publish-and-Subscribe-Ansatzes an die Auswerteeinrichtung 18 übertragen werden oder bei einer Zwischenspeicherung in der Auswertedatenbank 16 durch einen Pull-Mechanismus von der Auswerteeinrichtung 18 aktiv bei der Empfangseinrichtung 13 bzw. der Auswertedatenbank 16 abgefragt werden.

In ähnlicher Weise können die durch die Anfrageeinheit 14 im ersten Netzwerk 11 abgefragten ersten Daten in einer Abfragedatenbank 17 zwischengespeichert und beispielsweise in regelmäßigen Abständen oder in vorgegebenen Zeitabständen über die zweite Kommunikationsverbindung 8 übertragen werden.

Die beschriebene Einweg-Koppelvorrichtung 10 stellt durch die Verwendung der Mithöreinrichtung 15 anstelle spezieller Einweg-Verbindungen durch Datendioden eine kostengünstige Realisierung dar. Durch die Separierung der ersten Kommunikationsverbindung 19 und der zweiten Kommunikationsverbindung 23 in Bezug auf die verwendeten Protokolle und Datenpräsentation kann die Einweg-Koppelvorrichtung 10 flexibel für unterschiedliche Anwendungsbereiche und Anwendungsprotokolle eingesetzt werden. Der Transfer der ersten Daten über bspw. den Netzwerk-Tap kann über ein möglichst einfaches Protokoll erfolgen. Komplexere Protokolle, wie beispielsweise OPC UA, sind auf die erste Kommunikationsverbindung 19 beschränkt und werden in der Anfrageeinrichtung 14, insbesondere in der ersten Protokolleinheit 2, terminiert. Die ersten Daten können beispielsweise in Form eines XML-Dokuments abgelegt werden. Dies macht die Lösung skalierbar in Bezug auf ihre Verwendung für weitere Anwendungsbereiche und den Einsatz unterschiedlicher Protokolle in den umgebenden Netzen.

Einen weiteren Vorteil stellt die Unabhängigkeit von verschlüsselter Kommunikation, insbesondere innerhalb des ersten Netzwerks 11, dar. Erfolgt die Kommunikation im ersten Netzwerk und/oder im zweiten Netzwerk 12 unter Einsatz von Sicherheitsprotokollen, wie beispielsweise SSL/TLS, müssen an der Kopplungsstelle, siehe die gestrichelte Linie in Figur 1, Schlüsselinformationen zum Entschlüsseln der Kommunikation vorhanden sein, falls der Netzwerk-Tap direkt im ersten Netzwerk 11 angebracht ist. Im beschriebenen Lösungsansatz wird eine verschlüsselte Kommunikation unterstützt. Die Verschlüsselung im ersten Netzwerk 11 wird an der Anfrageeinrichtung 14 terminiert. Die Übertragung über die zweite Kommunikationsverbindung 23 erfolgt unverschlüsselt oder kann wiederum durch eine zwischen der Anfrageeinrichtung 14 und der Empfangseinrichtung 13 vereinbarte Verschlüsselung verschlüsselt übertragen werden.

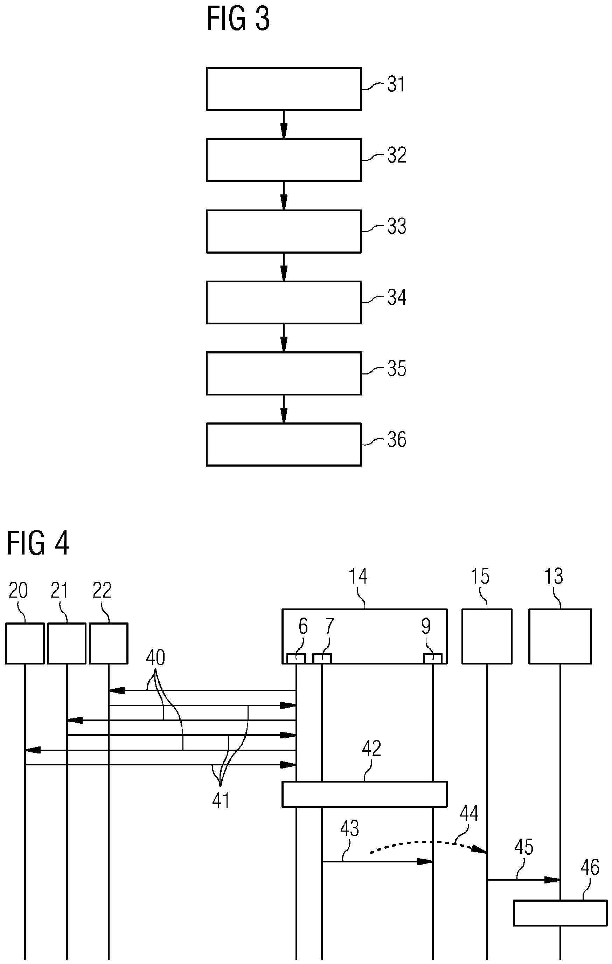

In Figur 3 werden die einzelnen Verfahrensschritte des erfindungsgemäßen Verfahrens dargestellt. Im ersten Verfahrensschritt 31 wird eine erste Kommunikationsverbindung 19 innerhalb des ersten Netzwerkes 11 bereitgestellt. Im Verfahrensschritt 32 werden nun über die erste Kommunikationsverbindung erste Daten von den Vorrichtungen 20, 21, 22 oder weiteren Vorrichtungen im ersten Netzwerk 11 abgefragt. Dazu kann eine Anfrageeinrichtung 14 vorgegebene Anfrageprofile enthalten. Im Verfahrensschritt 33 werden die abgefragten ersten Daten über die Kommunikationsverbindung 19 in der Anfrageeinheit 14 empfangen. Dabei wird die erste Kommunikationsverbindung 19 entsprechend dem verwendeten Kommunikationsprotokoll terminiert und insbesondere eine Authentisierung der Vorrichtungen 20, 21, 22 bzw. der Anfrageeinrichtung 14 durchgeführt und verschlüsselt übertragene erste Daten wieder entschlüsselt. Im Verfahrensschritt 34 werden nun die ersten Daten über eine separate, beispielsweise externe Schleifenverbindung 8, übertragen. Die Schleifenverbindung 8 befindet sich zwar innerhalb des Bereichs des Netzwerks 11, ist jedoch physikalisch von der ersten Kommunikationsverbindung 19 separiert. Im Verfahrensschritt 35 werden die ersten Daten an der externen Schleifenverbindung 8 mitgehört und im Verfahrensschritt 36 an ein zweites Netzwerk 12 mit geringer Sicherheitsanforderung 12 übermittelt.

Figur 4 zeigt nun das Verfahren anhand eines Sicherheitsnetzes in einer Bahnsicherungsanlage mit Sicherungsvorrichtungen 20, 21, 22. Zwischen den einzelnen Vorrichtungen 20, 21, 22 und der Anfrageeinrichtung 14 ist jeweils eine erste Kommunikationsverbindung 19 bereitgestellt, die in der Anfrageeinrichtung 14 an der Netzwerkschnittstelle 6 terminieren. Die Anfrageeinrichtung 14 stellt hier einen OPC UA Client dar. Über die erste Kommunikationsverbindung 19 werden Anfragenachrichten 40 an die Vorrichtungen 20, 21, 22 gesendet und die angeforderten ersten Daten werden in Antwortnachrichten 41 an die Anfrageeinrichtung 14 zurückgesendet. Die in den Antwortnachrichten 41 enthaltenen ersten Daten werden durch die erste Protokolleinheit 2 extrahiert und in eine andere Darstellung (beispielsweise in eine Extensible Markup Language, kurz XML genannt) konvertiert. Die ersten Daten werden mittels der zweiten Protokolleinheit 3 entsprechend einem zweiten Kommunikationsprotokoll der zweiten Kommunikationsverbindung 23 strukturiert und über die Ausgangsschnittstelle 7 zur Übertragung über die Schleifenverbindung 8 ausgegeben und an der Eingangsschnittstelle 9 wieder empfangen, siehe Pfeil 43. Auf der Schleifenverbindung 8 zwischen einer Ausgangsschnittstelle 7 und einer Eingangsschnittstelle 9 wird die Kommunikationsverbindung von der Mithöreinrichtung 15 kopiert, siehe gestrichelter Pfeil 44 und an die Empfangseinheit 13 übermittelt, siehe Pfeil 45. Über die physikalische Eigenschaft des Netzwerk-Taps ist gewährleistet, dass dies rückwirkungsfrei erfolgt, d.h. dass kein Informationsfluss in Rückrichtung vom zweiten Netzwerk in das erste Netzwerk 11 möglich ist.

Die Empfangseinrichtung 13 fungiert beispielsweise als OPC UA Server. Die Empfangseinrichtung 13 kann aber auch ein einfacheres Protokoll unterstützen und die in dem entsprechenden Protokoll auf der zweiten Kommunikationsverbindung 23 übertragene Nachricht 43 bzw. weitergeleitete Nachricht 45 verarbeiten. Eine Anfrage einer Auswerteeinrichtung 18 kann nun auf Basis der in der Auswertedatenbank oder in der Empfangseinrichtung 13 gespeicherten ersten Daten beantwortet werden.

Ein wesentlicher Vorteil dieses Aufbaus besteht darin, dass eine Integration der Einweg-Koppelvorrichtung in bestehende Steuerungsnetzwerke erfolgen kann, ohne dass eine Änderung oder Anpassung der existierenden Komponenten notwendig ist. Dabei kann die Einweg-Koppelvorrichtung als physisch getrennte Anfrageeinrichtung 14, Mithöreinrichtung 15 und Empfangseinrichtung 13 oder als eine einzige integrierte Vorrichtung ausgebildet sein.

Die Empfangseinrichtung 13 erfasst die Diagnosedaten von den Vorrichtungen 20, 21, 22. Dies kann z.B. mittels OPC UA, Telnet, SNMP, FTP, SCP, http oder ähnlichem erfolgen. Beispielsweise kann die Anfrageeinheit 14 zyklisch, z.B. getriggert durch einen internen Timer, erste Daten von den Vorrichtungen abfragen und in der Abfragedatenbank 17 der Anfrageeinheit 14 sammeln. Ebenso ist es möglich, dass eine Datei 42 gebildet wird, welche die geänderte insbesondere in ein anderes Format konvertierte Datenwerte enthält. Diese Datei 42 überträgt die Anfrageeinheit 13 zwischen zwei Netzwerkschnittstellen 7, 9 der Anfrageeinheit 14 z.B. über FTP oder http. D.h. die Anfrageeinheit 14 überträgt die Datei zu sich selbst. Diese Übertragung wird über die Mithöreinrichtung 15 rückwirkungsfrei mitgehört.

Die mitgehörte Datenübertragung wird von der Mithöreinrichtung 15 an die Empfangseinheit übertragen. Das Übertragen der Datei kann in einer Nachricht erfolgen. Im Allgemeinen ist es ebenso möglich, dass die Übertragung in Fragmenten, also Teilstücken, erfolgt. Dann muss die Empfangseinrichtung 13 die Fragmente zusammenfügen. Die Datei 42 kann eine oder mehrere Prüfsummen umfassen, die beispielsweise als eine digitale Signatur, über CRC gebildet wird. Die Datei 42 kann redundant codiert sein, so dass Übertragungsfehler korrigierbar sind. Dazu können ebenfalls Fehlerkorrekturverfahren verwendet werden, wie sie z.B. bei der http Übertragung bekannt sind.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Einweg-Koppelvorrichtung zum rückwirkungsfreien Übertragen von Daten von einem ersten Netzwerk (11) mit hoher Sicherheitsanforderung in ein zweites Netzwerk (12) mit geringer Sicherheitsanforderung, enthaltend eine Anfrageeinrichtung (14), eine Mithöreinrichtung (15) und eine Empfangseinrichtung (13), wobei
die Anfrageeinrichtung (14) derart ausgebildet ist, eine erste Kommunikationsverbindung (19) innerhalb des ersten Netzwerks (12) zu mindestens einer Vorrichtung (20, 21, 22) bereitzustellen und darüber erste Daten von der mindestens einen Vorrichtung (20, 21, 22) abzufragen und anschließend die ersten Daten über eine zweite Kommunikationsverbindung (23) auf einer separaten und außerhalb der Anfrageeinrichtung (14) verlaufenden Leitungsschleife (8) von einer Ausgangsschnittstelle der Anfrageeinrichtung (14) direkt an eine Eingangsschnittstelle der Anfrageeinrichtung (14) zu übertragen, und
die Mithöreinrichtung (15), die derart ausgebildet ist, Daten an der separaten Leitungsschleife (8) mitzuhören und an eine Empfangseinrichtung (13), die im zweiten Netzwerk (12) angeordnet ist, zu übermitteln.

2. Einweg-Koppelvorrichtung nach Anspruch 1, wobei die Anfrageeinrichtung (14) eine erste Protokolleinheit (2) zur Bereitstellung eines ersten Kommunikationsprotokolls für die Kommunikationsverbindung (19) zu der mindestens einen Vorrichtung (20, 21, 22), insbesondere des OPC UA Protokolls, aufweist.

3. Einweg-Koppelvorrichtung nach Anspruch 1 oder 2, wobei die Anfrageeinrichtung (14) eine zweite Protokolleinheit (3) zur Bereitstellung eines zweiten Kommunikationsprotokolls für die Übertragung der ersten Daten über die Verbindungsschleife (8) aufweist.

4. Einweg-Koppelvorrichtung nach einem der Ansprüche 1 bis 3, wobei die Anfrageeinrichtung (14) eine Konvertierungseinheit (4) zur Formatkonvertierung für die ersten Daten aufweist.

5. Einweg-Koppelvorrichtung nach einem der Ansprüche 1 bis 4, wobei die Anfrageeinrichtung (14) eine Speichereinheit (5) zum Speichern der ersten Daten aufweist.

6. Einweg-Koppelvorrichtung nach einem der Ansprüche 1 bis 5, wobei die Mithöreinrichtung (15) als Daten-Kopierer ausgebildet ist.

7. Verfahren zum rückwirkungsfreien Übertragen von Daten von einem ersten Netzwerk (11) mit hoher Sicherheitsanforderung in ein zweites Netzwerk (12) mit geringer Sicherheitsanforderung, mit den Verfahrensschritten:
- Bereitstellen (31) einer ersten Kommunikationsverbindung (19) innerhalb des ersten Netzwerks (12), Abfragen (32) und Empfangen (33) von ersten Daten von mindestens einer Vorrichtung (20, 21, 22) im ersten Netzwerk (11) über die erste Kommunikationsverbindung (19),
- Übertragen (34) der ersten Daten in einer zweiten Kommunikationsverbindung (23) über eine separate und außerhalb der Anfrageeinrichtung (14) verlaufende Leitungsschleife (8) von einer Ausgangsschnittstelle der Anfrageeinrichtung (14) direkt an eine Eingangsschnittstelle innerhalb des ersten Netzwerks (11),
- Mithören (35) der ersten Daten an der separaten Leitungsschleife (8), und
- Übermitteln (36) der ersten Daten an ein zweites Netzwerk (12) mit geringerer Sicherheitsanforderung.

8. Verfahren nach Anspruch 7, wobei ein erstes Kommunikationsprotokoll, insbesondere des OPC UA Protokolls, für die Kommunikationsverbindung (19) zu der mindestens einen Vorrichtung (20, 21, 22) verwendet wird, und/oder
ein zweites Kommunikationsprotokoll für die Übertragung der ersten Daten über die separate Leitungsschleife (8) verwendet wird.

9. Verfahren nach Anspruch 7 oder 8, wobei das Format der ersten Daten in einer Anfrageeinrichtung (14) konvertiert wird, und/oder
die ersten Daten in einer Speichereinheit (5) gespeichert werden.

10. Verfahren nach einem der Ansprüche 7 bis 9, wobei die ersten Daten auf der ersten Kommunikationsverbindung (19) verschlüsselt übertragen werden und vor der Übertragung auf der Verbindungsschleife (8) entschlüsselt werden.

11. Verfahren nach Anspruch 10, wobei die Daten auf der Verbindungsschleife (8) unverschlüsselt übertragen werden.

12. Verfahren nach Anspruch 10, wobei die Daten zur Übertragung auf der Verbindungsschleife (8) verschlüsselt übertragen werden.

13. Verfahren nach einem der Ansprüche 7 bis 12, wobei die ersten Daten in einer Auswertedatenbank (16) im zweiten Netzwerk gespeichert und abrufbar oder selbsttätig von der Auswertedatenbank an eine Auswerteeinrichtung (18) weiterleitet werden.

14. Computerprogrammprodukt, das direkt in einen Speicher eines digitalen Computers ladbar ist, umfassend Programmcodeteile, die dazu geeignet sind, die Schritte des Verfahrens nach einem der Ansprüche 7 bis 13 durchzuführen.

## Claims

1. One-way coupling device for feedback-free transmission of data from a first network (11) with high security requirements into a second network (12) with low security requirements, containing a request apparatus (14), a monitoring apparatus (15) and a receiver apparatus (13), wherein
the request apparatus (14) is designed to make available a first communication connection (19) within the first network (12) to at least one device (20, 21, 22), and to request first data from the at least one device (20, 21, 22) via said communication connection (19), and subsequently to transmit the first data via a second communication connection (23) on a separate line loop (8), running outside the request apparatus (14), from an interrogation interface of the request apparatus (14) directly to an input interface of the request apparatus (14), and
the monitoring apparatus (15) which is designed to monitor data on the separate line loop (8) and to transfer it to a receiver apparatus (13) which is arranged in the second network (12).

2. One-way coupling device according to Claim 1, wherein the request apparatus (14) has a first protocol unit (2) for making available a first communication protocol for the communication connection (19) to the at least one device (20, 21, 22), in particular the OPC UA protocol.

3. One-way coupling device according to Claim 1 or 2, wherein the request apparatus (14) has a second protocol unit (3) for making available a second communication protocol for transmitting the first data via the connecting loop (8).

4. One-way coupling device according to one of Claims 1 to 3, wherein the request apparatus (14) has a conversion unit (4) for converting the format for the first data.

5. One-way coupling device according to one of Claims 1 to 4, wherein the request apparatus (14) has a memory unit (5) for storing the first data.

6. One-way coupling device according to one of Claims 1 to 5, wherein the monitoring apparatus (15) is embodied as a data copier.

7. Method for feedback-free transmission of data from a first network (11) with high security requirements into a second network (12) with low security requirements, having the method steps:
- making available (31) a first communication connection (19) within the first network (12), requesting (32) and receiving (33) first data from at least one device (20, 21, 22) in the first network (11) via the first communication connection (19),
- transmitting (34) the first data in a second communication connection (23) via a separate line loop (8), running outside the request apparatus (14), from an output interface of the request apparatus (14) directly to an input interface within the first network (11),
- monitoring (35) the first data on the separate line loop (8), and
- transferring (36) the first data to a second network (12) with lower security requirements.

8. Method according to Claim 7, wherein a first communication protocol, in particular the OPC UA protocol, is used for the communication connection (19) to the at least one device (20, 21, 22), and/or
a second communication protocol is used for transmitting the first data via the separate line loop (8).

9. Method according to Claim 7 or 8, wherein the format of the first data is converted in a request apparatus (14), and/or the first data is stored in a memory unit (5).

10. Method according to one of Claims 7 to 9, wherein the first data is transmitted in encrypted form on the first communication connection (19) and is decrypted before the transmission on the connecting loop (8).

11. Method according to Claim 10, wherein the data is transmitted in unencrypted form on the connecting loop (8).

12. Method according to Claim 10, wherein the data for transmission on the connecting loop (8) is transmitted in encrypted form.

13. Method according to one of Claims 7 to 12, wherein the first data is stored in an evaluation database (16) in the second network and is passed on in a retrievable or automatic fashion from the evaluation database to an evaluation apparatus (18) .

14. Computer program product which can be loaded directly into a memory of a digital computer, comprising program code parts which are suitable for carrying out the steps of the method according to one of Claims 7 to 13.

## Revendications

1. Dispositif de couplage à sens unique pour transmission de données sans rétroaction d'un premier réseau (11) avec une exigence de sécurité élevée à un deuxième réseau (12) avec une faible exigence de sécurité, contenant un équipement de requête (14), un équipement d'écoute (15) et un équipement de réception (13), l'équipement de requête (14) étant réalisé de manière à fournir une première liaison de communication (19) dans le premier réseau (12) vers au moins un dispositif (20, 21, 22) et à interroger par ce biais des premières données de l'au moins un dispositif (20, 21, 22) et à ensuite transmettre les premières données via une deuxième liaison de communication (23), via une boucle conductrice (8) séparée et passant en dehors de l'équipement de requête (14), d'une interface de sortie de l'équipement de requête (14) directement à une interface d'entrée de l'équipement de requête (14) et l'équipement d'écoute (15) qui est réalisé de manière à écouter des données au niveau de la boucle conductrice séparée (8) et à les transmettre à un équipement de réception (13) qui est agencé dans le deuxième réseau (12).

2. Dispositif de couplage à sens unique selon la revendication 1, l'équipement de requête (14) comportant une première unité de protocole (2) pour fournir un premier protocole de communication pour la liaison de communication (19) vers l'au moins un dispositif (20, 21, 22), en particulier le protocole OPC UA.

3. Dispositif de couplage à sens unique selon la revendication 1 ou 2, l'équipement de requête (14) comportant une deuxième unité de protocole (3) pour fournir un deuxième protocole de communication pour la transmission des premières données via la boucle de liaison (8).

4. Dispositif de couplage à sens unique selon l'une des revendications 1 à 3, l'équipement de requête (14) comportant une unité de conversion (4) pour la conversion du format pour les premières données.

5. Dispositif de couplage à sens unique selon l'une des revendications 1 à 4, l'équipement de requête (14) comportant une unité de mémoire (5) pour sauvegarder les premières données.

6. Dispositif de couplage à sens unique selon l'une des revendications 1 à 5, l'équipement d'écoute (15) étant réalisé en tant que copieur de données.

7. Procédé de transmission de données sans rétroaction d'un premier réseau (11) avec une exigence de sécurité élevée à un deuxième réseau (12) avec une faible exigence de sécurité, comportant les étapes suivantes :
- fourniture (31) d'une première liaison de communication (19) dans le premier réseau (12), interrogation (32) et réception (33) de premières données d'au moins un dispositif (20, 21, 22) dans le premier réseau (11) via la première liaison de communication (19),
- transmission (34) des premières données dans une deuxième liaison de communication (23), via une boucle conductrice (8) séparée et passant en dehors de l'équipement de requête (14), d'une interface de sortie de l'équipement de requête (14) directement à une interface d'entrée dans le premier réseau (11),
- écoute (35) des premières données au niveau de la boucle conductrice séparée (8) et
- transmission (36) des premières données à un deuxième réseau (12) avec une plus faible exigence de sécurité.

8. Procédé selon la revendication 7, un premier protocole de communication, et plus particulièrement le protocole OPC UA, étant utilisé pour la liaison de communication (19) vers l'au moins un dispositif (20, 21, 22) et/ou un deuxième protocole de communication étant utilisé pour la transmission des premières données via la boucle conductrice séparée (8).

9. Procédé selon la revendication 7 ou 8, le format des premières données étant converti dans un équipement de requête (14) et/ou les premières données étant stockées dans une unité de mémoire (5).

10. Procédé selon l'une des revendications 7 à 9, les premières données étant transmises sous forme cryptée sur la première liaison de communication (19) et étant décryptées avant la transmission sur la boucle de liaison (8) .

11. Procédé selon la revendication 10, les données étant transmises non cryptées sur la boucle de liaison (8).

12. Procédé selon la revendication 10, les données étant, aux fins de la transmission, transmises sous forme cryptée sur la boucle de liaison (8).

13. Procédé selon l'une des revendications 7 à 12, les premières données étant sauvegardées dans une base de données d'évaluation (16) dans le deuxième réseau et retransmises sous forme interrogeable ou automatiquement de la base de données d'évaluation à un équipement d'évaluation (18).

14. Produit de programme informatique qui peut être chargé directement dans une mémoire d'un ordinateur numérique, comprenant des parties de code de programme qui sont adaptées pour exécuter les étapes du procédé selon l'une des revendications 7 à 13.
